# EUROPÄISCHE PATENTSCHRIFT

(11) **EP 2 269 923 B1**
(45) Veröffentlichungstag und Bekanntmachung des Hinweises auf die Patenterteilung: **03.12.2014**
(21) Anmeldenummer: 10160537.6
(22) Anmeldetag: 21.04.2010
(51) Int. Cl.: B65G 33/04, B65G 47/84

(54) **Vorrichtung zum Zuführen von Behältern zu einer Weiterverarbeitungseinheit**
Device for feeding containers to a processing unit
Dispositif de transport de récipients vers une unité de transformation

(30) Priorität: 29.06.2009 DE 102009026046
(43) Veröffentlichungstag der Anmeldung: 05.01.2011
(73) Patentinhaber: Krones AG, 93073 Neutraubling (DE)
(72) Erfinder: Seger, Martin, 92318, Neumarkt i. d. Opf. (DE); Hüttner, Johann, 84066, Mallersdorf (DE)
(74) Vertreter: Grünecker, Kinkeldey, Stockmair & Schwanhäusser

(56) Entgegenhaltungen:
- FR-A- 1 150 864
- JP-A- 7 157 056
- JP-A- 58 125 520
- JP-U- H 024 816
- JP-U- 57 147 812
- JP-U- 62 059 615
- US-A- 3 565 235
- US-A- 4 301 912

## Beschreibung

Die vorliegende Erfindung betrifft eine Vorrichtung und ein Verfahren zum Zuführen von Behältern zu einer Weiterverarbeitungseinheit. Im Besonderen empfängt die Weiterverarbeitungseinheit die Behälter mit einem Abstand D zueinander. Zur Herstellung des Abstandes ist eine Einteilschnecke vorgesehen, mit der über die Länge der Einteilschnecke der erforderliche Abstand zwischen den Behältern herstellbar ist. An einem Anfang der Einteilschnecke laufen die Behälter Stoß an Stoß ein. An einem Ende der Einteilschnecke weisen die Behälter untereinander den erforderlichen Abstand auf.

Das europäische Patent EP 1 914 181 B1 offenbart eine Vorrichtung zum Ändern des Abstandes zwischen diskreten, aufeinander folgend geförderten Objekten bzw. Behältern. Die vorgesehene Weiterverarbeitungseinheit empfängt die Objekte mit einem vorgegebenen Endabstand. Um den vorgegebenen Endabstand zu erreichen, ist eine Einteilschnecke zum Zuführen mit einem variablen Abstand zwischen dem Anfangsabstand und einem Zwischenabstand für die Objekte vorgesehen. Die Einteilschnecke umfasst eine Keilrille, so dass stromabwärts der Abstand zwischen den einzelnen Objekten zunimmt. Zwischen der Einteilschnecke und der Weiterverarbeitungseinheit ist ein Abstandsänderungsrad vorgesehen, das den erforderlichen Endabstand der Behälter erzielt, um die Behälter letztendlich in diesem Endabstand an die Weiterverarbeitungseinheit zu übergeben.

Die deutsche Gebrauchsmusterschrift DE 20 2006 015 775 U1 offenbart eine Behandlungsmaschine für Behälter wie Flaschen, Gefäße, Kunststoffbehälter und dergleichen. Die Behandlungsmaschine verfügt über Transfersterne, die einen Behandlungsrotor bestücken. Die Transfersterne und der Behandlungsrotor weisen jeweils am Außenumfang Aufnahmeplätze für die Behälter auf. Mittels einer Einlaufschnecke werden die Behälter in einem erforderlichen Abstand an den Rotor des Einlaufsterns übergeben. Zu der Einlaufschnecke gelangen die Behälter über ein Transportband.

Die deutsche Offenlegungsschrift DE 31 49 307 offenbart eine Einteilschnecke für in Reihe zu transportierende Gegenstände, insbesondere Flaschen in einer Etikettiermaschine. Der Einlaufabschnitt der Förderschnecke besteht aus elastischem Material und hat eine Ganghöhe, die dem Flaschendurchmesser entspricht, so dass nach Lösen einer vorgeordneten Flaschensperre die Flaschen von den ersten Gängen der Einteilschnecke gedämpft aufgefangen werden. Bei lückenloser Flaschenfolge in der Einteilschnecke stützen sich die Flaschen im Einlaufbereich gegeneinander ab. Der Staudruck wird dabei vom ersten Gang des aus starrem Materials bestehenden Beschleunigungsabschnitts aufgenommen.

Bei dem Dokument FR 1 150 864 werden Behälter auf zwei getrennten Bändern zu jeweils den Bändern zugeordneten Einteilschnecken transportiert. Mit der hier beschriebenen Vorrichtung werden die Behälter, welche auf zwei Transportbändern angeliefert werden zu einem auslaufenden Behälterstrom zusammengeführt.

Die JP 07-157056 zeigt eine Vorrichtung zum Transport von Erzeugnissen gemäß Oberbegriff des Anspruchs 1, bei der eine Schnecke und zwei hintereinander angeordnete Transportbänder vorgesehen sind.

Aufgabe der Erfindung ist, eine Vorrichtung und ein Verfahren zu schaffen, bei denen es möglich ist, Behälter unter einem vordefinierten Abstand einer Weiterverarbeitungseinheit zuzuführen, wobei der sichere und beschädigungsfreie Transport der Behälter gewährleistet ist. Ferner gilt es zu gewährleisten, Stillstandzeiten der Maschine zu vermeiden.

Die obige Aufgabe wird durch eine Vorrichtung gemäß Anspruch 1 und ein Verfahren gemäß Anspruch 7 gelöst.

Unter dem Begriff Weiterverarbeitungseinheit ist im weitesten Sinne eine Etikettiermaschine zu verstehen. Über eine Einteilschnecke können somit der Etikettiermaschine die zu etikettierenden Behälter wie Flaschen, Dosen oder dergleichen unter einem vordefinierten Abstand zugeführt werden. Der vordefinierte Abstand ist deshalb erforderlich, damit die zu etikettierenden Behälter in einem Einlaufstern für die Etikettiermaschine übergeben werden können.

Da am Ende der Einteilschnecke aufgrund der Einstellung eines größeren Abstandes sehr hohe Bandgeschwindigkeiten gefahren werden, ist es erforderlich, dass die Flaschen ruhig auf den Transportbändern stehen. Hierzu schlägt die Vorrichtung vor, dass der Einteilschnecke mindestens zwei antreibbare Transportbänder derart in Bezug auf die Einteilschnecke zugeordnet sind, dass die Behälter in Kontakt mit einer Keilrille der Einteilschnecke sind. Das erste Transportband, welches am Anfang der Einteilschnecke vorgesehen ist, besitzt eine kleinere Transportgeschwindigkeit als das Transportband, welches am Ende der Einteilschnecke die Behälter transportiert.

Es ist von besonderem Vorteil, die Transportbänder derart anzutreiben, dass deren Geschwindigkeiten an eine Referenzgeschwindigkeit der Einteilschnecke angepasst sind. Die Einteilschnecke rotiert je nach zu verarbeitenden Gegenständen und dem gewählten Etikettierverfahren mit einer entsprechend angepassten Geschwindigkeit. Diese Geschwindigkeit dient als Referenz für die Geschwindigkeiten der Transportbänder, die der Einteilschnecke zugeordnet sind.

Gemäß der Erfindung sind das erste und das zweite Transportband parallel zueinander angeordnet. Die Transportrichtungen des ersten und des zweiten Transportbandes sind dabei gegenüber einer Drehachse der Einteilschnecke um einen Winkel geneigt.

Der Winkel, unter dem das erste Transportband und das zweite Transportband gegenüber der Drehachse der Einteilschnecke geneigt sind, ist derart gewählt, dass am Anfang der Einteilschnecke die Behälter ausschließlich in Kontakt mit dem ersten Transportband sind und das am Ende der Einteilschnecke die Behälter ausschließlich in Kontakt mit dem zweiten Transportband sind.

Die gegenwärtige Erfindung ermöglicht es, die Geschwindigkeit im Zulauf der Behälter zu der Einteilschnecke zu reduzieren. Die Transportbänder, welche der Schnecke zugeordnet sind, wurden geteilt. Am Anfang der Einteilschnecke wäre die Geschwindigkeit des Transportbandes nur geringfügig schneller als der Flaschenstrom, damit der Strom der Flaschen lückenlos in die Einteilschnecke einläuft. In der Ausführungsform ist die Einteilschnecke schräg zu den Transportbändern angeordnet. Mit Zunahme der Steigung der Einteilschnecke werden die Behälter zunehmend auf das schnell laufende Transportband übergeschoben. Damit erreicht man eine lineare Zunahme der Zugkraft der Transportbänder auf die Behälter. Der Grund für die notwendige schnellere Geschwindigkeit liegt darin, dass die Einteilschnecke nie durch ihre Rotation die Behälter schieben darf. Beim Erreichen der Endsteigung der Einteilschnecke befindet sich dann der Behälter vollständig auf dem schnelleren Transportband.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht den realen Größenverhältnissen, da einige Formen vereinfacht und andere Formen zur besseren Veranschaulichung vergröβert im Verhältnis zu anderen Elementen dargestellt sind. Es zeigen:
- **Figur 1**: einen schematischen Aufbau der Vorrichtung zum Zuführen von Behältern zu einer Weiterverarbeitungseinheit; und
- **Figur 2**: eine Detailansicht der Einlaufschnecke, wobei die beiden Transportbänder schräg zur Drehachse der Einlaufschnecke angeordnet sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

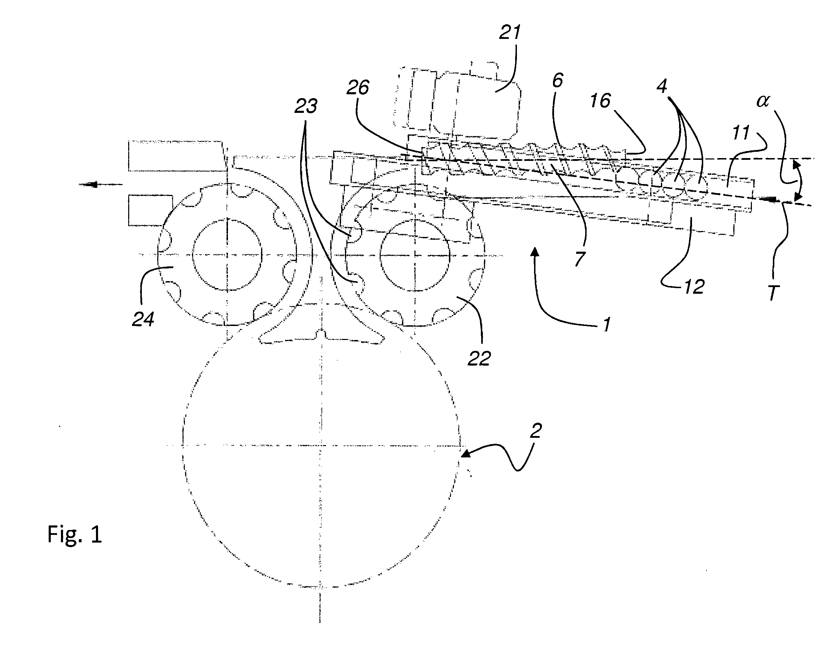

**Figur 1** zeigt eine erste Ausführungsform der Erfindung. Von der Einteilschnecke 6 werden die Behälter 4 an einen Einlaufstern 22 für die Weiterverarbeitungseinheit 2 übergeben. Von der Weiterverarbeitungseinheit 2 gelangen die Behälter 4 zu einem Auslaufstern 24. Von dort gelangen die Behälter 4 zu einer Verpackungseinheit oder ähnlichen Einrichtungen. Bei der in Figur 1 gezeigten Ausführungsform sind der Einteilschnecke 6 ein erstes Transportband 11 und ein zweites Transportband 12 zugeordnet. Die beiden Transportbänder 11 und 12 sind dabei parallel zueinander angeordnet. Für das erste Transportband 11 laufen die Behälter 4 Stoß an Stoß ein. Die beiden Transportbänder 11 und 12 definieren eine Transportrichtung T, welche zu einer Drehachse 8 der Einteilschnecke 6 um einen Winkel α geneigt ist. Über das erste Transportband 11 gelangen die Behälter 4 zu einem Anfang 16 der Einteilschnecke 6. Über die Drehbewegung der Einteilschnecke 6 werden die Behälter 4 letztendlich zum Einlaufstern 22 der Weiterverarbeitungseinheit 2 transportiert. Die Einteilschnecke 6 hat hierzu eine Keilrille 7 ausgebildet. Die Steigung der Einteilschnecke 6 nimmt vom Anfang 16 der Einteilschnecke 6 zum Ende 26 der Einteilschnecke 6 zu.

Bei der in Figur 1 gezeigten Ausführungsform gelangen die Behälter 4 immer mehr unter den Einfluss des zweiten Transportbandes 12, je weiter sich die Behälter 4 in Richtung des Endes 26 der Einteilschnecke 6 bewegt haben. Um sicherzustellen, dass die Behälter 4 während der Bewegung vom Anfang 16 der Einteilschnecke 6 zum Ende 26 der Einteilschnecke 6 hin dauernd in Kontakt mit der Einteilschnecke 6 sind, ist eine entsprechende Führung 18 parallel zur Einteilschnecke 6 vorgesehen. Das zweite Transportband 12 besitzt dabei eine größere Geschwindigkeit, als das erste Transportband 11. Somit ist gewährleistet, dass die Behälter 4 nicht aufgrund der Rotation der Einteilschnecke 6 geschoben werden.

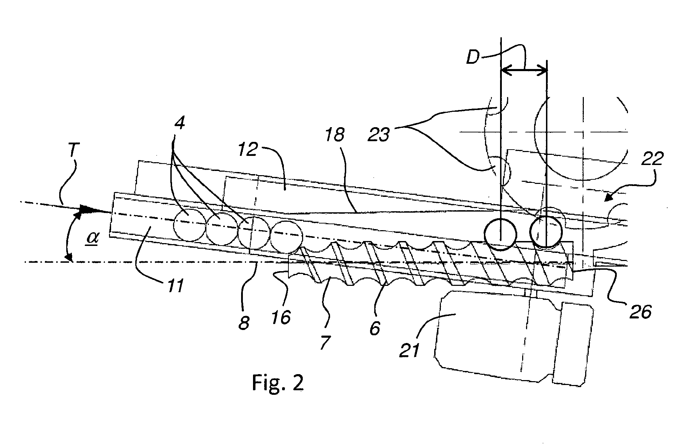

**Figur 2** zeigt eine Detailansicht der ersten Ausführungsform der Erfindung. Das erste und das zweite Transportband 11, 12 ist dabei unter einem Winkel α zur Drehachse 8 der Einteilschnecke 6 angeordnet. Die Einteilschnecke 6 wird über einen Motor 21 angetrieben. Da das erste Transportband 11 und das zweite Transportband 12 parallel zueinander angeordnet sind, ist die Transportrichtung T ebenfalls unter dem Winkel α zu der Drehachse 8 der Einteilschnecke 6 geneigt. Die Behälter 4 gelangen über das erste Transportband 11 Stoß an Stoß zum Anfang 16 der Einteilschnecke 6. Um sicherzustellen, dass die Behälter 4 Stoß an Stoß angeliefert werden, ist die Transportgeschwindigkeit des ersten Transportbandes 11 derart gewählt, dass die Transportgeschwindigkeit des ersten Transportbandes 11 etwas größer ist, als die Transportgeschwindigkeit der Einteilschnecke 6. Somit werden die Behälter 4 unter einem leichten Staudruck an die Einteilschnecke 6 übergeben. Parallel zur Einteilschnecke 6 ist eine Führung 18 angeordnet, um sicherzustellen, dass während des Transports der Behälter 4 vom Anfang 16 der Einteilschnecke 6 zum Ende 26 der Einteilschnecke 6 hin die Behälter 4 ständig in Kontakt mit der Keilrille 7 bzw. mit der Einteilschnecke 6 sind. Am Ende 26 der Einteilschnecke 6 haben die Behälter 4 einen erforderlichen Abstand D erreicht, um somit in die Aufnahmen 23 eines Einlaufsterns 22 übergeben werden zu können.

Die Erfindung wurde unter Bezugnahme auf bevorzugte Ausführungsformen beschrieben. Es ist für einen Fachmann selbstverständlich, dass Änderungen und Abwandlungen gemacht werden können, ohne dabei den Schutzbereich der nachstehenden Ansprüche zu verlassen.

## Patentansprüche

1. Vorrichtung (1) zum Zuführen von Behältern (4) zu einer Weiterverabeitungseinheit (2),die die Behälter (4) mit einem Abstand (D) zueinander empfängt,
wobei eine einzige Einteilschnecke (6) vorgesehen ist, mit der über die Länge (L) der Einteilschnecke (6) der erforderliche Abstand (D) zwischen den Behältern (4) herstellbar ist,
wobei an einem Anfang (16) der Einteilschnecke (6) die Behälter (4) Stoß an Stoß einlaufen und an einem Ende (26) der Einteilschnecke (6) den erforderlichen Abstand (D) untereinander aufweisen,
wobei über ein erstes Transportband (11) die Behälter (4) zu einem Anfang (16) der Einteilschnecke (6) gelangen,
wobei sich die Behälter (4) beim Erreichen einer Endsteigung der Einteilschnecke (6) vollständig auf einem zweiten Transportband (12) befinden,
wobei die antreibbaren Transportbänder (11, 12) derart in Bezug auf die Einteilschnecke (6) angeordnet sind, dass die Behälter (4) in Kontakt mit einer Keilrille (7) der Einteilschnecke (6) sind, und
wobei eine Transportgeschwindigkeit des zweiten Transportbandes (12) am Ende (26) der Einteilschnecke (6) größer ist als eine Transportgeschwindigkeit des ersten Transportbandes (11) am Anfang (16) der Einteilschnecke (6),
**dadurch gekennzeichnet, dass**
das erste Transportband (11) und das zweite Transportband (12) parallel zueinander angeordnet und wobei die Transportrichtungen (T) des ersten und des zweiten Transportbandes (11, 12) gegenüber einer Drehachse (8) der Einteilschnecke (6) um einen Winkel (α) geneigt sind.

2. Vorrichtung (1) nach Anspruch 1, wobei die Transportbänder (11, 12) derart antreibbar sind, dass deren Geschwindigkeiten an eine Referenzgeschwindigkeit der Einteilschnecke (6) angepasst sind.

3. Vorrichtung (1) nach Anspruch 1 oder 2, wobei das erste Transportband (11) derart antreibbar ist, dass seine Transportgeschwindigkeit grösser ist als die Transportgeschwindigkeit am Anfang (16) der Einteilschnecke (6).

4. Vorrichtung (1) nach Anspruch 1, wobei der Winkel (α) derart gewählt ist, dass am Anfang (16) der Einteilschnecke (6) die Behälter (4) ausschließlich auf dem ersten Transportband (11) stehen und dass am Ende (26) der Einteilschnecke (6) die Behälter (4) ausschließlich auf dem zweiten Transportband (12) stehen.

5. Vorrichtung (1) nach einem der vorangehenden Ansprüche, wobei parallel zur Drehachse (8) der Einteilschnecke (6) eine Führung (18) angebracht ist, damit der Kontakt der Behälter vom Anfang (16) der Einteilschnecke (6) bis zum Endes (26) der Einteilschnecke (6) der Keilrille (7) der Einteilschnecke (6) in Kontakt sind.

6. Etikettiermaschine mit einem Einlaufstern (22) mit Aufnahmen (23) für Behälter (4) und einer Vorrichtung (1) zum Zuführen der Behälter (4) nach einem der Ansprüche 1 bis 5.

7. Verfahren zum Zuführen von Behältern (4) zu einer Weiterverarbeitungseinheit (2), die die Behälter (4) mit einem Abstand (D) zueinander empfängt,
wobei eine einzige Einteilschnecke (6) vorgesehen ist, mit der über die Länge (L) der Einteilschnecke (6) der erforderliche Abstand (D) zwischen den Behältern (4) herstellbar ist,
wobei an einem Anfang (16) der Einteilschnecke (6) die Behälter (4) Stoß an Stoß einlaufen und an einem Ende (26) der Einteilschnecke (6) den erforderlichen Abstand (D) untereinander aufweisen,
wobei über ein erstes Transportband (11) die Behälter (4) zu einem Anfang (16) der Einteilschnecke (6) gelangen
wobei sich die Behälter (4) beim Erreichen einer Endsteigung der Einteilschnecke (6) vollständig auf einem zweiten Transportband (12) befinden,
wobei die antreibbaren Transportbänder (11, 12) derart in Bezug auf die Einteilschnecke (6) angeordnet sind, dass die Behälter (4) in Kontakt mit einer Keilrille (7) der Einteilschnecke (6) sind, und
wobei eine Transportgeschwindigkeit des zweiten Transportbandes (12) am Ende (26) der Einteilschnecke (6) größer ist als eine Transportgeschwindigkeit des ersten Transportbandes (11) am Anfang (16) der Einteilschnecke (6),
wobei das erste Transportband (11) und das zweite Transportband (12) parallel zueinander angeordnet und die Transportrichtungen (T) des ersten und des zweiten Transportbandes (11, 12) gegenüber einer Drehachse (8) der Einteilschnecke (6) um einen Winkel (α) geneigt sind.

8. Verfahren nach Anspruch 7, wobei die Transportbänder (11, 12) derart angetrieben werden, dass deren Geschwindigkeiten an eine Referenzgeschwindigkeit der Einteilschnecke (6) angepasst sind.

9. Verfahren nach Anspruch 7 oder 8, wobei das erste Transportband (11) derart angetrieben ist, dass seine Transportgeschwindigkeit grösser ist als die Transportgeschwindigkeit am Anfang (16) der Einteilschnecke (6).

10. Verfahren nach Anspruch 7, wobei der Winkel (α) derart gewählt ist, dass am Anfang (16) der Einteilschnecke (6) die Behälter (4) ausschließlich auf dem ersten Transportband (11) stehen und dass am Ende (26) der Einteilschnecke (6) die Behälter (4) ausschließlich auf dem zweiten Transportband (12) stehen.

11. Verfahren nach einem der Ansprüche 7 - 10, wobei parallel zur Drehachse (8) der Einteilschnecke (6) eine Führung (18) angebracht ist, damit der Kontakt der Behälter vom Anfang (16) der Einteilschnecke (6) bis zum Endes (26) der Einteilschnecke (6) der Keilrille (7) der Einteilschnecke (6) in Kontakt sind.

## Claims

1. Device (1) for supplying containers (4) to a processing unit (2) which receives the containers (4) at a spacing (D) from each other,
wherein a single infeed worm (6) is provided with which the required spacing (D) between the containers (4) can be produced over the length (L) of the infeed worm (6),
wherein the containers (4) arrive edge-to-edge at a start (16) of the infeed worm (6) and have the required spacing (D) between them at an end (26) of the infeed worm (6),
wherein the containers (4) reach a start (16) of the infeed worm (6) via a first conveyor belt (11),
wherein, on reaching a final incline of the infeed worm (6), the containers (4) are all located on a second conveyor belt (12),
wherein the drivable conveyor belts (11, 12) are arranged in relation to the infeed worm (6) in such a way that the containers (4) are in contact with a V-groove (7) of the infeed worm (6), and
wherein a conveying speed of the second conveyor belt (12) at the end (26) of the infeed worm (6) is greater than a conveying speed of the first conveyor belt (11) at the start (16) of the infeed worm (6),
**characterised in that**
the first conveyor belt (11) and the second conveyor belt (12) are arranged parallel to each other and wherein the conveying directions (T) of the first and second conveyor belts (11, 12) are inclined at an angle (α) with respect to an axis of rotation (8) of the infeed worm (6).

2. Device (1) according to Claim 1, wherein the conveyor belts (11, 12) can be driven in such a way that their speeds are adjusted to a reference speed of the infeed worm (6).

3. Device (1) according to Claim 1 or 2, wherein the first conveyor belt (11) can be driven in such a way that its conveying speed is greater than the conveying speed at the start (16) of the infeed worm (6).

4. Device (1) according to Claim 1, wherein the angle (α) is chosen in such a way that at the start (16) of the infeed worm (6) the containers (4) are only on the first conveyor belt (11) and that at the end (26) of the infeed worm (6) the containers (4) are only on the second conveyor belt (12).

5. Device (1) according to any one of the preceding claims, wherein parallel to the axis of rotation (8) of the infeed worm (6) there is provided a guide (18), so the contact of the containers from the start (16) of the infeed worm (6) to the end (26) of the infeed worm (6) are in contact [with] the V-groove (7) of the infeed worm (6).

6. Labelling machine with an infeed starwheel (22) with recesses (23) for containers (4) and a device (1) for supplying the containers (4) according to any one of Claims 1 to 5.

7. Method for supplying containers (4) to a processing unit (2) which receives the containers (4) at a spacing (D) from each other,
wherein a single infeed worm (6) is provided with which the required spacing (D) between the containers (4) can be produced over the length (L) of the infeed worm (6),
wherein the containers (4) arrive edge-to-edge at a start (16) of the infeed worm (6) and have the required spacing (D) between them at an end (26) of the infeed worm (6),
wherein the containers (4) reach a start (16) of the infeed worm (6) via a first conveyor belt (11),
wherein, on reaching a final incline of the infeed worm (6), the containers (4) are all located on a second conveyor belt (12),
wherein the drivable conveyor belts (11, 12) are arranged in relation to the infeed worm (6) in such a way that the containers (4) are in contact with a V-groove (7) of the infeed worm (6), and
wherein a conveying speed of the second conveyor belt (12) at the end (26) of the infeed worm (6) is greater than a conveying speed of the first conveyor belt (11) at the start (16) of the infeed worm (6),
wherein the first conveyor belt (11) and the second conveyor belt (12) are arranged parallel to each other and the conveying directions (T) of the first and second conveyor belts (11, 12) are inclined at an angle (α) with respect to an axis of rotation (8) of the infeed worm (6).

8. Method according to Claim 7, wherein the conveyor belts (11, 12) are driven in such a way that their speeds are adjusted to a reference speed of the infeed worm (6).

9. Method according to Claim 7 or 8, wherein the first conveyor belt (11) is driven in such a way that its conveying speed is greater than the conveying speed at the start (16) of the infeed worm (6).

10. Method according to Claim 7, wherein the angle (α) is chosen in such a way that at the start (16) of the infeed worm (6) the containers (4) are only on the first conveyor belt (11) and that at the end (26) of the infeed worm (6) the containers (4) are only on the second conveyor belt (12).

11. Method according to any one of Claims 7 to 10, wherein parallel to the axis of rotation (8) of the infeed worm (6) there is provided a guide (18), so the contact of the containers from the start (16) of the infeed worm (6) to the end (26) of the infeed worm (6) are in contact [with] the V-groove (7) of the infeed worm (6).

## Revendications

1. Dispositif (1) pour l'amenée de contenants ou récipients (4) à une unité de poursuite de transformation (2), qui accueille les contenants (4) selon une distance d'espacement (D) les uns par rapport aux autres, dispositif
dans lequel il est prévu une seule vis sans fin de répartition (6) à l'aide de laquelle il est possible d'établir, sur la longueur (L) de la vis sans fin de répartition (6), la distance d'espacement (D) nécessaire entre les contenants (4),
dans lequel les contenants (4) pénètrent dans le dispositif en étant contigus les uns aux autres, au niveau d'un début (16) de la vis sans fin de répartition (6), et présentent la distance d'espacement (D) réciproque les uns par rapport aux autres, au niveau d'une fin (26) de la vis sans fin de répartition (6), dans lequel les contenants (4) parviennent à un début (16) de la vis sans fin de répartition (6) par l'intermédiaire d'une première bande de transport (11), dans lequel les contenants (4), lorsqu'ils atteignent un pas terminal de la vis sans fin de répartition (6), se trouvent entièrement sur une deuxième bande de transport (12),
dans lequel les bandes de transport (11, 12) pouvant être entraînées sont agencées de manière telle par rapport à la vis sans fin de répartition (6), que les contenants (4) soient en contact avec une gorge de vis (7) de la vis sans fin de répartition (6), et
dans lequel une vitesse de transport de la deuxième bande de transport (12) au niveau de la fin (26) de la vis sans fin de répartition (6), est supérieure à une vitesse de transport de la première bande de transport (11) au niveau du début (16) de la vis sans fin de répartition (6),
**caractérisé en ce que**
la première bande de transport (11) et la deuxième bande de transport (12) sont agencées parallèlement l'une à l'autre, et les directions de transport (T) de la première et de la deuxième bande de transport (11, 12) étant inclinées d'un angle (α) par rapport à un axe de rotation (8) de la vis sans fin de répartition (6).

2. Dispositif (1) selon la revendication 1, dans lequel les bandes de transport (11, 12) peuvent être entraînées de manière à ce que leurs vitesses soient adaptées à une vitesse de référence de la vis sans fin de répartition (6).

3. Dispositif (1) selon la revendication 1 ou la revendication 2, dans lequel la première bande de transport (11) peut être entraînée de manière à ce que sa vitesse de transport soit supérieure à la vitesse de transport au niveau du début (16) de la vis sans fin de répartition (6).

4. Dispositif (1) selon la revendication 1, dans lequel l'angle (α) est choisi de manière à ce qu'au niveau du début (16) de la vis sans fin de répartition (6), les contenants (4) reposent exclusivement sur la première bande de transport (11), et qu'au niveau de la fin (26) de la vis sans fin de répartition (6), les contenants (4) reposent exclusivement sur la deuxième bande de transport (12).

5. Dispositif (1) selon l'une des revendications précédentes, dans lequel parallèlement à l'axe de rotation (8) de la vis sans fin de répartition (6), est placé un guide (18), pour que les contenants soient en contact avec la gorge de vis (7) de la vis sans fin de répartition (6), du début (16) de la vis sans fin de répartition (6) jusqu'à la fin (26) de la vis sans fin de répartition (6).

6. Machine d'étiquetage comprenant une étoile d'entrée (22) avec des emplacements d'accueil (23) pour des contenants (4), et un dispositif (1) pour l'amenée des contenants (4) selon l'une des revendications 1 à 5.

7. Procédé pour l'amenée de contenants ou récipients (4) à une unité de poursuite de transformation (2), qui accueille les contenants (4) selon une distance d'espacement (D) les uns par rapport aux autres, procédé
d'après lequel il est prévu une seule vis sans fin de répartition (6) à l'aide de laquelle il est possible d'établir, sur la longueur (L) de la vis sans fin de répartition (6), la distance d'espacement (D) nécessaire entre les contenants (4),
d'après lequel les contenants (4) pénètrent dans le dispositif en étant contigus les uns aux autres, au niveau d'un début (16) de la vis sans fin de répartition (6), et présentent la distance d'espacement (D) réciproque les uns par rapport aux autres au niveau d'une fin (26) de la vis sans fin de répartition (6), d'après lequel les contenants (4) parviennent à un début (16) de la vis sans fin de répartition (6) par l'intermédiaire d'une première bande de transport (11), d'après lequel les contenants (4), lorsqu'ils atteignent un pas terminal de la vis sans fin de répartition (6), se trouvent entièrement sur une deuxième bande de transport (12),
d'après lequel les bandes de transport (11, 12) pouvant être entraînées sont agencées de manière telle par rapport à la vis sans fin de répartition (6), que les contenants (4) soient en contact avec une gorge de vis (7) de la vis sans fin de répartition (6), et
d'après lequel une vitesse de transport de la deuxième bande de transport (12) au niveau de la fin (26) de la vis sans fin de répartition (6), est supérieure à une vitesse de transport de la première bande de transport (11) au niveau du début (16) de la vis sans fin de répartition (6),
d'après lequel la première bande de transport (11) et la deuxième bande de transport (12) sont agencées parallèlement l'une à l'autre, et les directions de transport (T) de la première et de la deuxième bande de transport (11, 12) sont inclinées d'un angle (α) par rapport à un axe de rotation (8) de la vis sans fin de répartition (6).

8. Procédé selon la revendication 7, d'après lequel on entraîne les bandes de transport (11, 12) de manière à ce que leurs vitesses soient adaptées à une vitesse de référence de la vis sans fin de répartition (6).

9. Procédé selon la revendication 7 ou la revendication 8, d'après lequel on entraîne la première bande de transport (11) de manière à ce que sa vitesse de transport soit supérieure à la vitesse de transport au niveau du début (16) de la vis sans fin de répartition (6).

10. Procédé selon la revendication 7, d'après lequel l'angle (α) est choisi de manière à ce qu'au niveau du début (16) de la vis sans fin de répartition (6), les contenants (4) reposent exclusivement sur la première bande de transport (11), et qu'au niveau de la fin (26) de la vis sans fin de répartition (6), les contenants (4) reposent exclusivement sur la deuxième bande de transport (12).

11. Procédé selon l'une des revendications 7 - 10, d'après lequel parallèlement à l'axe de rotation (8) de la vis sans fin de répartition (6), est placé un guide (18), pour que les contenants soient en contact avec la gorge de vis (7) de la vis sans fin de répartition (6), du début (16) de la vis sans fin de répartition (6) jusqu'à la fin (26) de la vis sans fin de répartition (6).
